(19) Europäisches Patentamt
European Patent Office
Office européen des brevets

(11) **EP 4 328 179 A1**

(12) **EUROPÄISCHE PATENTANMELDUNG**

(43) Veröffentlichungstag:
**28.02.2024 Patentblatt 2024/09**

(21) Anmeldenummer: **23184341.8**

(22) Anmeldetag: **10.07.2023**

(51) Internationale Patentklassifikation (IPC):
*C01B 32/05* (2017.01)

(52) Gemeinsame Patentklassifikation (CPC):
**C01B 32/05**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **25.08.2022 DE 102022121579**

(71) Anmelder: **Deutsches Zentrum für Luft- und Raumfahrt e.V.**
**53227 Bonn (DE)**

(72) Erfinder:
- **Schwan, Marina**
  **51377 Leverkusen (DE)**
- **Kröner, Jessica**
  **53639 Königswinter (DE)**
- **Milow, Barbara**
  **50354 Hürth (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **SCHWEFEL-KOHLENSTOFF-VERBINDUNGEN MITTELS MIKROWELLEN**

(57) Gegenstand der Erfindung ist ein Verfahren zur Herstellung von einem Schwefel-Kohlenstoff-Komposit, in dem Schwefel mit Kohlenstoff kovalent gebunden durch Reaktion von elementarem Schwefel und Aerogel in einem Mikrowellenreaktor ist sowie ein entsprechendes Komposit.

Fig. 1

**Beschreibung**

Gegenstand der Erfindung ist ein Verfahren zur Herstellung von einem Schwefel-Kohlenstoff-Komposit, in dem Schwefel mit Kohlenstoff kovalent gebunden durch Reaktion von elementarem Schwefel und Aerogel in einem Mikrowellenreaktor ist sowie ein entsprechendes Komposit.

Bei Raumtemperatur liegt Schwefel als kronenförmiger Cyclooctaschwefel ($\alpha$-$S_8$) vor. Bei 95,5°C findet eine Umwandlung des orthorhombischen Schwefels ($\alpha$-$S_8$) in monoklinen $\beta$-*Schwefel* statt, dieser schmilzt bei 119,6°C [Meyer B (1976) Elemental sulfur. Chem. Rev. 76: 367. DOI:10.1021/cr60301a003].

Oberhalb von 120°C liegen in der Schwefelschmelze Schwefelringe verschiedener Größe ($S_n$, n=5-33) vor. Bei Temperaturen oberhalb von 159°C steigt die Schmelzviskosität aufgrund der radikalischen Ringöffnungspolymerisation schlagartig an. Beim weiteren Erhitzen nimmt die Viskosität ab einer Temperatur von 243°C wieder ab und es bilden sich kurze ($S_n$, n<6) Schwefelketten. Die Siedetemperatur liegt bei 444 °C. Im gasförmigen Zustand liegen Schwefelmoleküle in Form von $S_{2-8}$ vor, wobei sich das Gleichgewicht bei steigenden Temperaturen hin zu kürzeren $S_2$-Spezien verschiebt. Im gasförmigen Zustand bei 600°C liegt Schwefel in Form von $S_6$- (etwa 58,8%) und etwa 16,4% in Form von $S_2$-Radikale vor. Diese Schwefel-Radikale können bei höheren Temperaturen mit Kohlenstoff (beispielsweise Aktivkohle) reagieren und mit ihm kovalente Bindungen bilden [Korpiel JA, Vidic RD (1997) Effect of Sulfur Impregnation Method on Activated Carbon Uptake of Gas-Phase Mercury. Environmental Science & Technology 31: 2319. DOI: 10.1021/es9609260].

Kovalent gebundener Schwefel in einer Kohlenstoff-Matrix (Komposit) ist auch bei der Entfernung vom giftigen Quecksilber aus Wasser, sowie in Metall-Schwefel-Batterien von großer Bedeutung. In beiden Anwendungen dient Schwefel als Aktivmaterial, welcher in Form eines Schwefel-Kohlenstoff-Komposit vorliegt. In der Metall-Schwefel-Batterie ist Schwefel ein elektrochemisch aktives Material.

Die Herstellung von solchen Kompositen, oft Infiltration oder Imprägnierung genannt, findet in der Regel bei 400 bis 600°C statt und dauert etwa zwei bis sechs Stunden [Liu W, Vidic RD, Brown TD (1998) Optimization of Sulfur Impregnation Protocol for Fixed-Bed Application of Activated Carbon-Based Sorbents for Gas-Phase Mercury Removal. Environmental Science & Technology 32: 531. DOI:10.1021/es970630; Nojabaee M, Sievert B, Schwan M, et al. (2021) Ultramicroporous carbon aerogels encapsulating sulfur as the cathode for lithium-sulfur batteries. J. Mater.Chem. A 9: 6508. DOI:10.1039/D0TA11332H]. Dabei kann der Gesamtprozess mit Heiz- und Kühlphasen über 10 Stunden dauern und ist somit sehr zeit- und energieintensiv. Die wichtigsten Nachteile der Herstellung von Schwefel-Kohlenstoff-Kompositen durch Gasinfiltration sind die lange Dauer und hoher Energieverbrauch.

US 2015/0155549 A1 beschreibt die Funktionalisierung von Kohlenstoff-Materialien, in welchen Schwefel aufgrund einer hohen Affinität zu Polysulfiden gebunden werden kann.

In DE 10 2015 210 402 A1 wird ein Schwefel-Polymer-Komposit beschrieben, wobei als Polymer cyclisiertes Polyacrylnitril (cPAN), oder Polypyrrol, oder Polythiophen, oder Polyphenylen dient. Schwefel wird dabei kovalent oder ionisch mit cPAN verbunden.

Die Aufgabe der vorliegenden Erfindung besteht darin, die vorgenannten Verfahren zur Herstellung von Schwefel-Kohlenstoff-Komposit zu vereinfachen und insbesondere die Verfahrensdauer zu verkürzen, in dem Schwefel mit Kohlenstoff kovalent gebunden durch Reaktion von elementarem Schwefel und Aerogel in einem Mikrowellenreaktor umgesetzt wird. Insbesondere ist es Aufgabe der vorliegenden Erfindung, die Herstellung von Schwefel-Kohlenstoff-Kompositen zu optimieren, insbesondere dessen Dauer und Energieverbrauch zu verbessern.

Zur Lösung der vorgenannten Aufgabe stellt die vorliegende Erfindung ein Verfahren bereit, bei der Mikrowellen als Hitzequelle für die Reaktion von Schwefel mit Kohlenstoff dienen. Überraschenderweise wurde gefunden, dass entsprechende Komposite durch den Einsatz von Mikrowellenstrahlung deutlich vereinfacht und in einer verkürzten Zeitdauer hergestellt werden können.

Die Erfindung betrifft in einer ersten Ausführungsform ein Verfahren zur Herstellung von einem Schwefel-Kohlenstoff-Komposit, in dem Schwefel mit Kohlenstoff kovalent gebunden durch Reaktion von elementarem Schwefel und Aerogel in einem Mikrowellenreaktor.

Die Aufgabe wurde gelöst, indem Schwefel-Kohlenstoff-Komposite mit Hilfe von Mikrowellen als Hitzequelle hergestellt werden. Dadurch werden die Dauer und der Energieverbrauch signifikant reduziert.

Mit Hilfe von Mikrowellen können Schwefel-Kohlenstoff-Komposite innerhalb von wenigen Minuten, beispielsweise 10 bis 30 Minuten bei einer erhöhten Temperatur, beispielsweise von 200 bis 250°C erfolgreich hergestellt werden, was deutlich schneller erfolgt als mit bekannten Methoden (Infiltration in Gasphase).

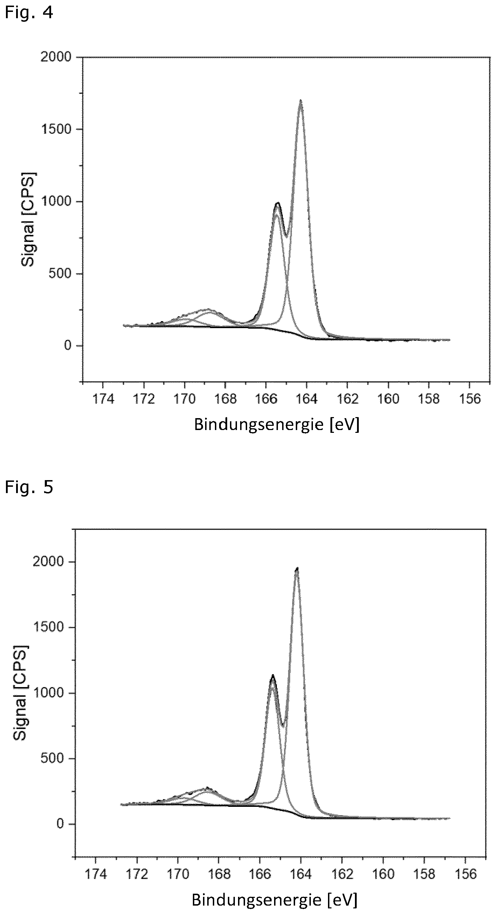

Mikrowellen sind bekanntermaßen hochfrequente elektromagnetische Wellen mit einer Frequenz von 300 MHz bis 300 GHz, welche aufgrund der Frequenz thermische Wirkung auf Materialien haben. Kohlenstoff-Materialien, wie Aktivkohle oder Kohlenstoff-Aerogele werden durch dielektrische Verluste erwärmt. Im elektromegnetischen Feld der Mikrowellen versuchen sich die ladungstragenden Kohlenstoffatome in Richtung des wechselnden Feldes auszurichten. Durch die freien Elektronen des Kohlenstoff-Materials können elektrische Ströme durch Mikrowellen induziert werden, weshalb es zur Erhitzung der Aktivkohle kommt [Zhu F-l, Yang Z, Zhao J-p, Zhao X (2016) Microwave assisted preparation of expanded graphite/sulfur composites as cathodes for Li-S batteries. New Carbon Materials 31: 199. DOI:https://doi.org/10.1016/S1872-5805(16)60011-2]. In der Publikation wird ein graphitisches Material untersucht, welches mit unterschiedlichen Schwefelmengen infiltriert wurde. Die thermogravimetrische Analyse (dort Fig. 4) zeigt ein einstufiges Verhalten, was auf eine Schwefelbeladung überwiegend in den Mesoporen (2 bis 50 nm) hinweist. Die elektrochemischen Untersuchungen zeigen ein "Zwei-Plateau-Verhalten": zunächst löst sich Schwefel an der Oberfläche und im zweiten Schritt findet die Schwefelreduktion statt. Das weist darauf hin, dass der Polysulfid-Shuttle nicht ausreichend unterdrückt wurde. Erfindungsgemäß konnte jedoch gezeigt werden, dass bei amorphen Kohlenstoff-Aerogelen die Mikrowellen-Infiltrationsmethode erfolgreich umgesetzt und eine Beladung sowohl in Mikro- (kleiner 2 nm), als auch in Mesoporen erzielt wurde. Dabei wurde mittels XPS-Analyse festgestellt, dass der Schwefel mit Kohlenstoff hier kovalent gebunden ist. Dadurch wird das Lösen des Schwefels in dem Elektrolyten verhindert und der Verlust des Aktivmaterials reduziert. Die Autoren beschreiben ein graphitisches, nicht amorphes Material. Die elektrochemischen Untersuchungen zeigen ein "Zwei-Plateau-Verhalten".

Erfindungsgemäß wird die direkte Anbindung von Schwefel mit Kohlenstoff während der Schwefelinfiltration erreicht. Es handelt sich damit nicht um ein Schwefel-Polymer-Komposit, der bei Kompositherstellung entsteht.

Bei einer erfindungsgemäßen Behandlung von Schwefel-Kohlenstoff-Kompositen mit Mikrowellen unter Druck wird Schwefel rasch durch die entstehende Wärme geschmolzen und teilweise in die Gasphase überführt. Dabei kann Schwefel mit dem Kohlenstoff reagieren.

Erfindungsgemäß wird die Oberfläche der Aerogele nicht modifiziert und enthält keine Funktionalisierungsgruppen, während in dem oben genannten Stand der Technik ein anderes Konzept zur Unterdrückung des Polysulfid-Schuttles vorgeschlagen. Die Verfahren des Stands der Technik Methode erfordern zusätzliche Schritte in der Synthese: Aktivierung oder Oxidierung; Funktionalisierung; Waschen und Trocknung. Lediglich zwei letzte Verfahrensschritte sind ähnlich: Vermischen mit Schwefel; Schwefelinfiltration.

Ausführungsbeispiel:

Herstellung von Schwefel-Kohlenstoff-Kompositen:

- Das getrocknete, wasserfreie ein handelsübliche Kohlenstoff-Aerogel ((Schwan Marina; Lorenz Ratke (DE) (2019) Verfahren zur Herstellung flexibler Aerogele auf Basis von Resorcin-Formaldehyd sowie mit diesem Verfahren erhältliche Aerogele DE102012218548)) wurde mit wasserfreiem Schwefel vermengt. Die Schwefelmenge ($m_S$) wurde

so berechnet, dass das Mikro- und Mesoporenvolumen ($V_{Pore}$), ermittelt mittels Physisorption, komplett gefüllt wird.

$$ m_s = V_{Pore} \cdot m_{CA} \cdot \rho_S \cdot 1{,}1{,} $$

wobei $m_{CA}$ die Masse des Kohlenstoff-Aerogels ist und.

Um Verluste auszugleichen, wurde die berechnete Menge um 10% erhöht.

- Das Kohlenstoff-Schwefel-Gemisch wird in einer Schwingmühle unter Inertatmosphäre (Ar, $N_2$), um Bildung von Schwefeloxiden zu vermeiden, bei 30 Hz für 30 sec gemahlen.

Mikrowellenbehandlung:

- Das Schwefel-Kohlenstoff-Gemisch wurde in spezielle mikrowellengeeignete Behältnisse unter Inertatmosphäre (Ar, $N_2$) überführt und dicht verschlossen.
- Die Mikrowellenbehandlung bei einer Leistung 1 bis 50 W dauerte insgesamt 10 bis 30 Minuten bei 200 bis 250°C. Die Mikrowelle-Anlage wurde temperatur- und nicht leistungs-gesteuert gefahren. Die Leistung variierte während des Versuchs abhängig von der Temperatur.

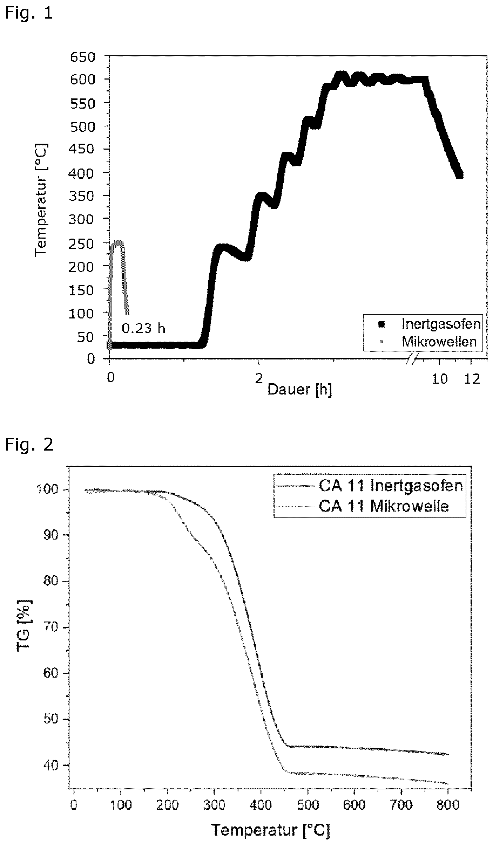

In Fig. 1 wird die thermische Behandlung von Schwefel-Kohlenstoff-Kompositen mit Mikrowellen (0,23h) und in einem Inertgasofen (12h) gegenübergestellt.

Die Schwefelmenge in einem Schwefel-Kohlenstoff-Komposit konnte mit Hilfe von thermogravimetrischer Analyse (Fig. 2) untersucht werden. Die Fig. 2 zeigt, dass sich die Schwefelmenge in beiden Kompositen leicht unterscheidet. Die thermogravimetrische Analyse von Schwefel-Kohlenstoff-Kompositen mit Mikrowellen (0,23h, rot) unterscheidet sich von derjenigen in einem Inertgasofen (12h, schwarz).

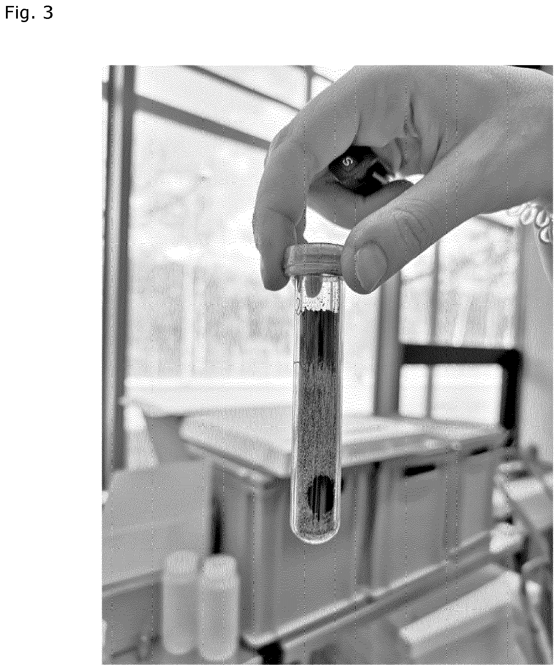

Die Fig. 3 zeigt einen Schwefel-Kohlenstoff-Komposit, welcher etwa 0,2h mit den Mikrowellen behandelt wurde.

Die Fig. 4 (Mikrowelle) und Fig. 5 (Inertgasofen) zeigen XPS-Spektren im Bereich von 158 bis 172 eV. Anhand der Spektren können Schwefelbindungen analysiert werden. Der Peak bei 163,8 eV entspricht der Kohlenstoff-Schwefel Bindung und bei 165,8 eV den Schwefel-Schwefel Bindungen. Die Spektren von beiden Verfahren unterscheiden sich nicht.

**Patentansprüche**

1. Verfahren zur Herstellung von einem Schwefel-Kohlenstoff-Komposit, in dem Schwefel mit Kohlenstoff kovalent gebunden durch Reaktion von elementarem Schwefel und Aerogel in einem Mikrowellenreaktor.

2. Verfahren nach Anspruch 1, **dadurch gekennzeichnet, dass** man einen Mikrowellenreaktor mit einer Leistung von 0,1 bis 100 Watt einsetzt.

3. Verfahren nach Anspruch 1 oder 2. **Dadurch gekennzeichnet, dass** man die Reaktion im Verlauf von 10 bis 30 min und/ oder bei einer Temperatur im Bereich von 200 bis 250°C durchführt.

4. Schwefel-Kohlenstoff-Komposit, in dem Schwefel mit Kohlenstoff kovalent gebunden erhältlich nach einem Verfahren gemäß einem der Ansprüche 1 bis 3.

Fig. 1

Fig. 2

Fig. 3

Fig. 4

Fig. 5

**Europäisches Patentamt**
**European Patent Office**
**Office européen des brevets**

# EUROPÄISCHER RECHERCHENBERICHT

**Nummer der Anmeldung**

**EP 23 18 4341**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 114 792 777 A (UNIV XI AN JIAOTONG) 26. Juli 2022 (2022-07-26) * Ansprüche 2,7 * ----- | 1-4 | INV. C01B32/05 |
| X | US 2020/303723 A1 (ZAFIROPOULOS NICHOLAS A [US] ET AL) 24. September 2020 (2020-09-24) | 4 | |
| A | * Anspruch 6; Beispiel 2 * ----- | 1-3 | |

**RECHERCHIERTE SACHGEBIETE (IPC)**

C01B
H01M

Der vorliegende Recherchenbericht wurde für alle Patentansprüche erstellt

| Recherchenort | Abschlußdatum der Recherche | Prüfer |
|---|---|---|
| Den Haag | 8. Januar 2024 | Mattheis, Chris |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................................
& : Mitglied der gleichen Patentfamilie, übereinstimmendes Dokument

EPO FORM 1503 03.82 (P04C03)

8

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2024

| Im Recherchenbericht angeführtes Patentdokument | Datum der Veröffentlichung | Mitglied(er) der Patentfamilie | Datum der Veröffentlichung |
|---|---|---|---|
| CN 114792777 A | 26-07-2022 | KEINE | |
| US 2020303723 A1 | 24-09-2020 | AU 2020248357 A1 | 14-10-2021 |
| | | CA 3134235 A1 | 01-10-2020 |
| | | CN 113660999 A | 16-11-2021 |
| | | EP 3941612 A1 | 26-01-2022 |
| | | IL 286506 A | 31-10-2021 |
| | | JP 2022527195 A | 31-05-2022 |
| | | KR 20210139359 A | 22-11-2021 |
| | | SG 11202110215Y A | 28-10-2021 |
| | | US 2020303723 A1 | 24-09-2020 |
| | | US 2022278310 A1 | 01-09-2022 |
| | | WO 2020198095 A1 | 01-10-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150155549 A1
- DE 102015210402 A1
- DE 102012218548

**In der Beschreibung aufgeführte Nicht-Patentliteratur**

- **MEYER B.** Elemental sulfur. *Chem. Rev.,* 1976, vol. 76, 367
- **KORPIEL JA ; VIDIC RD.** Effect of Sulfur Impregnation Method on Activated Carbon Uptake of Gas-Phase Mercury. *Environmental Science & Technology,* 1997, vol. 31, 2319
- **NOJABAEE M ; SIEVERT B ; SCHWAN M et al.** Ultramicroporous carbon aerogels encapsulating sulfur as the cathode for lithium-sulfur batteries. *J. Mater.Chem. A,* 2021, vol. 9, 6508
- **ZHU F-I ; YANG Z ; ZHAO J-P ; ZHAO X.** Microwave assisted preparation of expanded graphite/sulfur composites as cathodes for Li-S batteries. *New Carbon Materials,* 2016, vol. 31, 199, https://doi.org/10.1016/S1872-5805(16)60011-2